(19) 

**Europäisches Patentamt**
**European Patent Office**
**Office européen des brevets**

(11) **EP 1 826 313 A1**

(12) **EUROPEAN PATENT APPLICATION**
published in accordance with Art. 158(3) EPC

(43) Date of publication:
**29.08.2007 Bulletin 2007/35**

(21) Application number: **05795668.2**

(22) Date of filing: **18.10.2005**

(51) Int Cl.:
*D06M 11/00* (2006.01)       *D06M 11/38* (2006.01)
*D03D 15/00* (2006.01)       *B60R 21/18* (2006.01)
*B60R 22/28* (2006.01)

(86) International application number:
**PCT/JP2005/019067**

(87) International publication number:
**WO 2006/043517 (27.04.2006 Gazette 2006/17)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.10.2004 JP 2004303932**

(71) Applicant: **TORAY INDUSTRIES, INC.**
**Tokyo 103-8666 (JP)**

(72) Inventors:
• **YOKOI, Daisuke**
**5200842 (JP)**
• **MORIMOTO, Atsushi**
**5670022 (JP)**

• **TSUCHIZAKI, Toru**
**3150038 (JP)**
• **SHIOTANI, Takashi**
**5250045 (JP)**
• **Matsumura, Kazuya**
**5670031 (JP)**

(74) Representative: **Webster, Jeremy Mark et al**
**Mewburn Ellis LLP**
**York House**
**23 Kingsway**
**London**
**WC2B 6HP (GB)**

(54) **FABRIC FOR RESTRAINT DEVICE AND PROCESS FOR PRODUCING THE SAME**

(57)   Disclosed herein is a fabric to be used for restraint devices having both internal pressure-holding capability or low air permeability and mountability or wearer comfort, especially for air belts suitable for practical use. The fabric to be used for restraint devices includes a coated woven fabric obtained by coating, with a resin, at least one surface of a woven fabric containing multifilaments, each of which is composed of microfibers each having a fineness of 0.05 to 1 dtex, wherein the thickness of the coated woven fabric is in the range of 0.10 to 0.25 mm.

EP 1 826 313 A1

Printed by Jouve, 75001 PARIS (FR)

**Description**

TECHNICAL FIELD

The present invention relates to a fabric to be used for restraint devices such as air bags and air belts.

BACKGROUND ART

Vehicles such as automobiles are equipped with restraint devices such as seat belts and air bags to protect occupants.

However, conventional seat belts involve a problem that a heavy load is suddenly applied onto an occupant during a vehicle crash. In order to relieve or reduce such a heavy load, there is disclosed a so-called air belt which is a seat belt including an inflatable bag inflated by injecting a gas thereinto using a gas generator concurrently with the occurrence of a crash to restrain an occupant and protect the occupant from the crash (see, for example, Patent Document 1). The air belt disclosed in Patent Document 1 further includes a knit cover which flexibly expands and contracts in the widthwise direction of the belt but hardly expands in the longitudinal direction of the belt so that when the inflatable bag is inflated, the air belt can be shortened in its longitudinal direction to tightly fit an occupant.

Such an air belt is always in contact with the body of an occupant as a seat belt while the occupant rides on a car or the like. If the air belt lacks wearer comfort, the occupant feels tired, thereby adversely affecting driving. Therefore, there is a demand for restraint devices having improved wearer comfort or mountability.

In order to meet such a demand, Patent Document 1 also discloses a fabric for forming the inflatable bag described above, which has a thickness of about 0.20 to 0.25 mm and is made of multifilaments whose monofilament fineness is 2.0 to 3.5 d (1.8 to 3.15 dtex) and total fineness is 210 to 315 d (180 to 315 dtex). However, even when such a fabric is used to produce an air belt, bulky folds are created by folding the fabric several times, which deteriorates the wearer comfort of the air belt used as a seat belt. Therefore, there is still a demand for restraint devices having further improved wearer comfort or mountability.

On the other hand, there is also disclosed a fabric for air bags, which uses microfibers each having a fineness less than 0.8 d (0.72 dtex) so as to have improved flexibility (see Patent Document 2).

Such a fabric exhibits low air permeability, but still has an air permeability of about 0.7 mL/cm$^2$·sec. Therefore, the fabric cannot satisfy requirements of air belts, such as rapid deployability and internal pressure-holding capability.

Patent Document 1: Japanese Patent Application Laid-open No. H11-348724
Patent Document 2: Japanese Patent Application Laid-open No. H7-258940

DISCLOSURE OF THE INVENTION

Problems to be solved by the Invention

It is therefore an object of the present invention to provide a restraint device excellent in both internal pressure-holding capability or low air permeability and mountability or wearer comfort, especially an air belt suitable for practical use.

Means for solving the Problems

In order to achieve the above object, the present invention adopts the following means.

1. A fabric for restraint devices, including a coated woven fabric obtained by coating, with a resin, at least one surface of a woven fabric containing multifilaments, each of which is composed of microfibers each having a fineness of 0.05 to 1 dtex, wherein the thickness of the coated woven fabric is in the range of 0.10 to 0.25 mm.
2. The fabric for restraint devices according to (1), wherein at least part of the microfibers constituting the woven fabric are made of a polyester containing a phosphorus-based copolymer component in an amount of 500 to 50,000 ppm by mass calculated as elemental phosphorus.
3. The fabric for restraint devices according to (1) or (2), wherein each of the microfibers constituting the woven fabric has a fineness of 0.25 dtex or less.
4. The fabric for restraint devices according to any one of (1) to (3), wherein the amount of the resin, with which the woven fabric is coated, is in the range of 5 to 40 g/m$^2$.
5. The fabric for restraint devices according to any one of (1) to (4), wherein the thickness of the coated woven fabric is 0.19 mm or less.
6. The fabric for restraint devices according to any one of (1) to (5), wherein the coated woven fabric has a tensile strength of 250 N/cm or more in its both warp direction and weft direction.

7. The fabric for restraint devices according to any one of (1) to (6), wherein the coated woven fabric has a flexural rigidity of 0.05 to 1.5 g·cm$^2$/cm in its both warp direction and weft direction, as measured according to KES-FB-2.

8. The fabric for restraint devices according to any one of (1) to (7), wherein the coated woven fabric has a bending hysteresis width of 0.1 to 0.7 g·cm/cm in its both warp direction and weft direction, as measured according to KES-FB-2.

9. The fabric for restraint devices according to any one of (1) to (8), wherein the coated woven fabric has a flexural rigidity of 0.05 to 0.25 g·cm$^2$/cm in its both warp direction and weft direction, as measured according to KES-FB-2 after the coated woven fabric was subjected to 100 times of rubbing and after the coated woven fabric was subjected to 300 times of rubbing according to a rubbing test based on JIS K 6404-1999 5.3.8.

10. The fabric for restraint devices according to any one of (1) to (9), wherein the coated woven fabric has a packability of 500 to 1300 cm$^3$ as measured according to ASTM 6478-00.

11. The fabric for restraint devices according to any one of (1) to (10), wherein the coated woven fabric has an air permeability of 0.1 mL/cm$^2$·sec or less as measured according to JIS L 1096 A (Frazier method).

12. The fabric for restraint devices according to any one of (1) to (11), wherein the coated woven fabric has a burning rate of 120 mm/min or less as measured according to FMVSS 302.

13. The fabric for restraint devices according to (12), wherein the coated woven fabric has a burning rate of 90 mm/min or less as measured according to FMVSS 302.

14. The fabric for restraint devices according to any one of (1) to (13), wherein the coated woven fabric has an LOI value of 18 or more as measured according to JIS 1091 E.

15. The fabric for restraint devices according to any one of (1) to (14), which is to be used for air bags.

16. The fabric for restraint devices according to any one of (1) to (14), which is to be used for air belts.

17. A fabric for restraint devices, including a coated woven fabric obtained by coating, with a resin, at least one surface of a woven fabric containing multifilaments, each of which is composed of flat fibers each having a cross section with an aspect ratio of 2 to 4, and each of which has a total fineness of 150 to 350 dtex.

18. The fabric for restraint devices according to (17), which is to be used for air bags.

19. The fabric for restraint devices according to (17), which is to be used for air belts.

20. A method for producing a fabric for restraint devices, including at least:

a first step of melt-extruding both, as an island-component, a resin composition containing polyethylene terephthalate having an intrinsic viscosity of 0. 6 or more and, as a sea-component, a resin composition having a higher solubility in a solvent for treatment used in a third step than the island-component into sea-island type conjugate fibers containing the sea-component in a ratio of 10 to 40 % by mass, and spinning and drawing the extruded conjugate fibers to obtain conjugate multifilaments, each of which has a monofilament fineness of 3 to 9 dtex, a total fineness of 150 to 350 dtex, and 15 to 120 filaments;
a second step of weaving a plain-weave fabric using the conjugate multifilaments obtained in the first step as the warp and weft so that the cover factor of the woven fabric is in the range of 1800 to 2400;
a third step of removing the sea-component of the woven fabric obtained in the second step so that microfibers each having a fineness of 0.05 to 1 dtex appear from the conjugate multifilaments; and
a fourth step of coating at least one surface of the woven fabric, from which the sea-component has been removed in the third step, with 5 to 40 g/m$^2$ of a resin; wherein the above steps are carried out in order.

21. The method for producing a fabric for restraint devices according to (20), wherein the island-component used in the first step is flame-retardant polyethylene terephthalate which is copolymerized with a bifunctional phosphorus compound in an amount of 500 to 50, 000 ppm calculated as phosphorus, and which has an intrinsic viscosity of 0.6 to 1.2.

22. The method for producing a fabric for restraint devices according to (20) or (21), further including, between the third step and the fourth step, the step of subjecting a base fabric, obtained by removing the sea-component from the woven fabric, to heat set at a temperature of 140 to 190°C for 1 to 2 minutes. (23) The method for producing a fabric for restraint devices according to any one of (20) to (22), wherein in the fourth step, coating of the woven fabric with the resin is performed in two or more times.

Effect of the Invention

According to the present invention, it is possible to provide a restraint device, such as an air belt, excellent not only in mountability or wearer comfort but also in rapid deployability or internal pressure-holding capability.

BEST MODE FOR CARRYING OUT THE INVENTION

A fabric for restraint devices of the present invention contains multifilaments. Examples of a polymer for forming the multifilaments include: polyesters such as polyethylene terephthalate, polybutylene terephthalate, and polyethylene naphthalate; polyamides such as polyhexamethylene adipamide, polytetramethylene adipamide, and polycapramide; polyacrylonitrile; polyvinyl alcohol; polyolefins such as polyethylene and polypropylene; aromatic polyamides; and aromatic polyesters. Among these polymers, polyesters are preferably used from the viewpoint of mechanical properties and heat resistance.

Further, from the viewpoint of improving flame retardancy, polyesters containing a phosphorus-based copolymer component are also preferably used. As will be described later, the fabric for restraint device of the present invention uses microfibers, but polyester fibers each having a smaller fineness are more likely to be burnt. Therefore, the use of a polyester containing a phosphorus-based copolymer component is effective in improving flame retardancy.

As such a phosphorus-based copolymer component, a bifunctional phosphorus compound is preferably used. By using a bifunctional phosphorus compound as a phosphorus-based copolymer component, it is possible to suppress deliquescence of phosphoric acid after copolymerization and therefore to suppress hydrolysis of the polyester.

The amount of the phosphorus-based copolymer component to be used for copolymerization is preferably in the range of 500 to 50,000 ppm by mass calculated as elemental phosphorus. By setting the amount of the phosphorus-based copolymer component to 500 ppm by mass or more, it is possible to obtain the effect of improving flame retardancy defined in FMVSS 302 (which will be described later). In addition, by setting the amount of the phosphorus-based copolymer component to 50,000 ppm by mass or less, it is also possible to prevent thermal decomposition or hydrolysis of the polyester without impairing mechanical strength required of a fabric for restraint devices. Prevention of thermal decomposition or hydrolysis of the polyester is effective in, for example, preventing the burst of a restraint device when the restraint device is deployed in desert or tropic climates.

Fibers constituting the multifilaments preferably contain a delustering agent such as titanium oxide, calcium carbonate, kaolin, or clay, a pigment, a dye, a lubricant, an antioxidant, a heat-resistant agent, a weathering agent, a UV absorber, an anti-static agent, or a flame retarder.

It is important that the fabric for restraint devices of the present invention contains multifilaments, each of which is composed of microfibers each having a fineness of 0.05 to 1 dtex. If the fineness of each of the microfibers exceeds 1 dtex, an obtained fabric is poor in flexibility when used as a fabric for restraint devices, and is not so thin as to keep excellent mountability even when folded several times. Particularly, in a case where an air belt is produced using such a fabric, the air belt is poor in wearer comfort, and therefore an occupant feels tired and pressured by the air belt. On the other hand, if the fineness of each of the microfibers is less than 0.05 dtex, there is a fear that the strength of the multifilament is lowered so that an obtained fabric lacks strength when used as a fabric for restraint devices. The fineness of each of the microfibers is preferably in the range of 0.08 to 0.5 dtex, more preferably in the range of 0.1 to 0.25 dtex.

Examples of a method for forming microfibers include: sea-island type conjugate spinning (i.e., two or more polymer components are spun into a sea-island type conjugate fiber in which island-component portions are dispersed in a sea-component, and then the sea component is removed by dissolution to expose the island-component portions as microfibers); fiber splitting (i.e., two or more polymer components are spun into a conjugate fiber in which these polymer components are arranged radially, and then the conjugate fiber is split into two or more segments by physical treatment or the like to obtain microfibers); and direct spinning (i.e., microfibers are directly formed by spinning). Among these methods, from the viewpoint of ease of quality control, sea-island type conjugate spinning is preferably employed because a monofilament fineness can be easily controlled and fluff is less likely to be generated. The sea-island type conjugate spinning will be described later in detail with reference to a method for producing the fabric for restraint devices of the present invention.

Alternatively, a multifilament composed of flat fibers each having a flat cross section may be used instead of the above-described multifilament composed of microfibers. By arranging such flat fibers substantially side-by-side so that the minor axis direction of each fiber corresponds to the thickness direction of a fabric, it is possible to reduce the height of a multifilament yarn and therefore to reduce the thickness of a woven fabric, thereby improving the mountability of the woven fabric. In this case, space between the monofilaments in the woven fabric is also reduced, and therefore the woven fabric can have a smooth surface. As will be described later, this makes it possible to uniformly coat the surface of the woven fabric with a small amount of a resin to achieve low air permeability. In addition, the use of such a woven fabric having a smooth surface has the effect of reducing frictional resistance between the two surfaces of the woven fabric, which contributes to rapid deployability of a restraint device.

The degree of flatness of the cross section of the flat fiber, that is, the ratio between a major axis and a minor axis of the cross section (hereinafter, also referred to as an "aspect ratio") of the flat fiber is in the range of 2 to 4. By setting the aspect ratio of the flat fiber to 2 or more, it is possible to obtain the above-described effects. In addition, by setting the aspect ratio of the flat fiber to 4 or less, it is also possible to prevent flexibility, and by extension, mountability of the woven fabric from being impaired and to prevent the monofilament from being divided into two or more pieces.

The cross section of the flat fiber can have an elliptical, rectangular, rhombus, cocoon-like, or left-right asymmetric shape which may have a projection or a depression or may be partially hollow.

In an embodiment of the fabric for restraint devices of the present invention using multifilaments, each of which is composed of flat fibers, from the viewpoint of the mechanical properties and mountability of the fabric, the fineness of each of the flat fibers is preferably in the range of 3 to 8 dtex, the number of filaments per multifilament is preferably in the range of 36 to 192, and the total fineness of the multifilament is preferably in the range of 150 to 350 dtex, more preferably in the range of 200 to 300 dtex.

The fabric for restraint devices of the present invention is made of a woven fabric containing the multifilaments. From the viewpoint of ease of mass production, cost reduction achieved by high-speed production, and stability of a weave structure, the woven fabric is preferably a plain-weave fabric.

It is important that the fabric for restraint devices of the present invention is made of a coated woven fabric obtained by coating at least one surface of the woven fabric described above with a resin to achieve low air permeability and, by extension, rapid deployability and internal pressure-holding capability.

The resin, with which the woven fabric is coated, preferably has heat resistance, cold resistance, and flame retardancy, and examples of such a resin include silicone resins, polyamide-based resins, polyurethane resins, and fluorocarbon resins. Among these resins, silicone resins are particularly preferably used from the viewpoint of heat resistance, aging resistance, and versatility. Examples of the silicone resins include dimethyl-based silicone resins, methyl vinyl-based silicone resins, methyl phenyl-based silicone resins, and fluorosilicone resins.

In an embodiment of the fabric for restraint devices of the present invention using microfibers, the amount of the resin, with which the woven fabric is coated, is preferably in the range of 5 to 40 $g/m^2$. By setting the amount of the resin to 5 $g/m^2$ or more, it is possible to achieve low air permeability, and by extension, rapid deployability and internal pressure-holding capability required of restraint devices. In addition, by setting the amount of the resin to 40 $g/m^2$ or less, it is also possible to prevent flexibility or mountability of the fabric from being impaired.

In an embodiment of the fabric for restraint devices of the present invention using microfibers, the thickness of the coated woven fabric is preferably 0.25 mm or less, more preferably 0.19 mm or less, from the viewpoint of mountability of the fabric. Further, from the viewpoint of keeping the strength of a base fabric for restraint devices and the strength of sewn portions of a restraint device to prevent the burst of an air bag or an air belt upon its deployment, the thickness of the coated woven fabric is preferably 0.10 mm or more, more preferably 0.15 mm or more.

The coated woven fabric constituting the fabric for restraint devices of the present invention preferably has a tensile strength of 250 N/cm or more in its both warp direction and weft direction. By setting the tensile strength to 250 N/cm or more, it is possible to prevent the burst of an air bag or an air belt upon its deployment.

Further, the coated woven fabric constituting the fabric for restraint devices of the present invention preferably has a flexural rigidity of 0.05 to 1.5 $g\cdot cm^2/cm$ in its both warp direction and weft direction, as measured according to KES-FB-2. By setting the flexural rigidity to 1.5 $g\cdot cm^2/cm$ or less, it is possible to improve the mountability of the fabric and to impart flexibility to an air belt so that an occupant does not feel tired and pressured by the air belt. In addition, by setting the flexural rigidity to 0.05 $g\cdot cm^2/cm$ or more, it is also possible to keep the shape of a restraint device stable when the restraint device is folded and mounted.

Further, the coated woven fabric constituting the fabric for restraint devices of the present invention preferably has a bending hysteresis width of 0.1 to 0.7 g·cm/cm in its both warp direction and weft direction, as measured according to KES-FB-2. By setting the bending hysteresis width to 0.7 g·cm/cm or less, it is possible to easily put a crease in a folded bag-shaped member for restraint devices, thereby improving the mountability of the fabric, and it is also possible to impart flexibility to an air belt so that an occupant does not feel tired and pressured by the air belt. In addition, by setting the bending hysteresis width to 0.1 g·cm/cm or more, it is also possible to keep the shape of a restraint device stable when the restraint device is folded and mounted. Particularly, in a case where such a fabric is used to produce an air belt, the air belt can have a good feeling not too soft as a seat belt.

Further, the coated woven fabric constituting the fabric for restraint devices of the present invention preferably has a flexural rigidity of 0.05 to 0.25 $g\cdot cm^2/cm$ in its both warp direction and weft direction, as measured according to KES-FB-2 after the coated woven fabric is rubbed 100 times or 300 times according to JIS K 6328-00 (5.3.8 rubbing test). By setting the flexural rigidity to 0.25 $g\cdot cm^2/cm$ or less, it is possible to improve the flexibility of, for example, an air belt produced using such a fabric as the air belt is repeatedly used as a seat belt. In addition, by setting the flexural rigidity to 0.05 $g\cdot cm^2/cm$ or more, it is also possible to keep the shape of a restraint device stable when the restraint device is folded and mounted.

The measurement method represented by "KES (Kawabata's evaluation system for fabric)" herein refers to a method for measuring basic dynamic characteristics of a fabric for the purpose of digitizing the texture, that is, feeling of a fabric a human body perceives, and is defined in the document entitled "The Standardization and Analysis of Hand Evaluation, 2nd Ed., S. Kawabata, the Textile Machinery Society of Japan, July 1980".

Further, the coated woven fabric constituting the fabric for restraint devices of the present invention preferably has a packability of 500 to 1300 $cm^3$ as measured according to ASTM 6478-00. By setting the packability to 1300 $cm^3$

or less, it is possible to improve the mountability of the fabric and to impart wearer comfort to an air belt. As described above, the lower limit value of the packability is about 500 cm$^3$ from the viewpoint of keeping the strength of the fabric.

Further, the fabric for restraint devices of the present invention preferably has an air permeability of 0.1 mL/cm$^2$·sec or less, more preferably 0.0 mL/cm$^2$·sec as measured according to JIS L 1096 A (Frazier method). By setting the air permeability to a value within the above range, it is possible to obtain a fabric for restraint devices which can be suitably used also for air belts required to have rapid deployability and internal pressure-holding capability.

Further, from the viewpoint of application to restraint devices for passenger cars, the coated woven fabric constituting the fabric for restraint devices of the present invention preferably has a burning rate of 120 mm/min or less, more preferably 90 mm/min or less as measured according to FMVSS 302.

Further, the fabric for restraint devices of the present invention preferably has an LOI value of 18 or more as measured according to JIS 1091 E. By setting the LOI value to 18 or more, it is possible to achieve a burning rate of 120 mm/min or less as measured according to FMVSS 302.

Hereinbelow, a preferred method for producing the fabric for restraint devices of the present invention will be described. The method for producing a fabric for restraint devices of the present invention includes at least the following first to fourth steps, and the fabric for restraint devices of the present invention is produced through these steps in order.

(First Step: Spinning)

In this step, sea-island conjugate spinning is carried out by using, as an island-component, a resin composition containing polyethylene terephthalate and, as a sea-component, a resin composition having higher solubility in a solvent for treatment used in a third step (which will be described later) than the island-component.

The intrinsic viscosity of polyethylene terephthalate used as the island-component is 0.6 or more, preferably 0.9 or more. By setting the intrinsic viscosity of the polyethylene terephthalate to 0.6 or more, it is possible for an obtained fabric to have sufficiently high strength as a fabric for restraint devices. From the viewpoint of stable spinning, the intrinsic viscosity of the polyethylene terephthalate is preferably 1.4 or less, more preferably 1.2 or less.

In a case where the solvent for treatment to be used in the third step is an organic solvent, for example, polystyrene can be used as the sea-component polymer. On the other hand, in a case where the solvent for treatment to be used in the third step is a water-based solvent, for example, polyethylene terephthalate copolymerized with 5-sodium isophthalic acid can be used as the sea-component polymer.

The ratio of the sea-component contained in a conjugate fiber is in the range of 10 to 40 % by mass. If the ratio of the sea-component is less than 10 % by mass, islands made of the island component are joined together when the sea-component and the island-component are melt-mixed so that microfibers cannot be obtained. On the other hand, if the ratio of the sea-component exceeds 40 % by mass, the ratio of the island-component for forming microfibers is relatively small so that the strength of an obtained fabric for restraint devices and the strength of sewn portions of an obtained restraint device tend to be poor. Further, from the viewpoint of achieving both small thickness or flexibility and low air permeability required of a fabric for restraint devices, the ratio of the sea-component is preferably in the range of 20 to 30 % by mass.

Both the sea-component and island-component are extruded into sea-island type conjugate fibers.

The number of islands contained in each of the sea-island type conjugate fibers is preferably 10 to 20. By setting the number of islands to 10 or more, it is possible to improve productivity. In addition, by setting the number of islands to 20 or less, it is also possible to prevent contact or joint between islands in the sea-island type conjugate fiber.

The number of holes per spinneret is preferably 240 or less from the viewpoint of uniform cooling of multifilaments extruded from the spinneret.

The extruded conjugate fibers are cooled to solidify them, and are then spun and drawn. The draw ratio of the conjugate fibers is preferably in the range of 4.0 to 6.0. By setting the draw ratio to 4.0 or more, preferably 5.0 or more, it is possible to sufficiently orient the island-component, thereby enabling an obtained fabric to have sufficiently high strength as a fabric for restraint devices. In addition, by setting the draw ratio to 6.0 or less, it is also possible to carry out spinning stably.

After drawing, conjugate multifilaments, each of which has 15 to 120 filaments and a total fineness of 150 to 350 dtex, are obtained.

The monofilament fineness of the conjugate multifilament is in the range of 2 to 15 dtex, preferably in the range of 3 to 9 dtex, from the viewpoint of uniform cooling and ease of spinning.

Prior to the next step of weaving, each of the conjugate multifilaments is preferably twisted. By twisting the conjugate multifilament, it is possible to more tightly bundle its monofilaments. Particularly, in a case where the monofilament fineness of the sea-island type conjugate multifilament is 3.0 dtex or less, the conjugate multifilament is preferably twisted to more tightly bundle its monofilaments. The number of twists of the twisted conjugate multifilament is preferably in the range of 30 to 150 T/m. By setting the number of twists of the twisted conjugate multifilament to 30 T/m or more, it is possible to more tightly bundle its monofilaments. In addition, by setting the number of twists of the twisted conjugate multifilament to 150 T/m or less, it is also possible to eliminate the necessity for releasing torque remaining in filaments by heat setting the twisted multifilament, thereby simplifying the step of twisting.

(Second Step: Weaving)

In this step, the multifilaments obtained in the first step are woven into a fabric.

Prior to weaving, the multifilaments may be subjected to sizing treatment.

From the viewpoint of reducing the thickness of the woven fabric, the weave structure of the woven fabric is preferably plain weave. Examples of a weaving machine to be used in this step include a water jet loom, a rapier loom, and an air jet loom.

Further, the cover factor of the woven fabric defined by the following formula is in the range of 1800 to 2400.

$$CF= N_w \times D_w^{1/2} + N_F \times D_F^{1/2}$$

where $N_w$ is a warp density (number of yarns per 2.54 cm), $D_w$ is a warp fineness (dtex), $N_F$ is a weft density (number of yarns per 2.54 cm, and $D_F$ is a weft fineness (dtex).

By setting the cover factor to 2400 or less, it is possible to achieve a small thickness required of a fabric for restraint devices. In addition, by setting the cover factor to 1800 or more, it is possible to keep properties, such as strength, required of a fabric for restraint devices.

(Third Step: Removal of Sea-Component)

In this step, the sea-component of the woven fabric obtained in the second step is removed so that microfibers each having a fineness of 0.05 to 1 dtex (preferably 0.25 dtex or less) appear from the conjugate multifilaments.

A solvent to be used for removing the sea-component can be selected from, for example, water, various aqueous solutions such as acid solutions and alkali solutions, and organic solvents depending on the kind of polymer used as the sea-component.

For example, in a case where polyethylene terephthalate copolymerized with 5.0 mol% of 5-sodium sulfoisophthalic acid (intrinsic viscosity: 0.70) is used as the sea-component, the sea-component can be removed by treating the woven fabric with a boiling 1 % sulfuric acid solution in a jet dyeing machine and then with an aqueous sodium hydroxide solution.

The temperature of the solution used for removing the sea-component and the time of the treatment for removing the sea-component are preferably determined by checking the progress of the treatment for removing the sea-component or the degree of reduction in the amount of the island-component.

Prior to the next fourth step, the woven fabric, from which the sea-component has been removed, is preferably subjected to heat set because after the treatment for removing the sea-component, the woven fabric has many wrinkles. By subjecting the woven fabric to heat set, it is possible to eliminate wrinkles, thereby improving the quality of the woven fabric.

Such heat-set treatment is preferably carried out by fixing the both ends of the woven fabric using a pin tenter and drying the woven fabric with hot air.

The temperature of the heat-set treatment is preferably in the range of 140 to 190°C. By setting the temperature of the heat-set treatment to 140°C or higher, it is possible to eliminate wrinkles of the woven fabric by virtue of the effect of heat set. In addition, by setting the temperature of the heat-set treatment to 190°C or less, it is also possible to prevent the woven fabric from becoming stiff due to heat set.

The time of the heat-set treatment is preferably in the range of 1 to 2 minutes.

(Fourth Step: Coating)

In this step, at least one surface of the woven fabric, from which the sea-component has been removed in the third step, is coated with a resin.

As a coating method to be used in this step, floating knife coating is preferably employed because the resin can be applied uniformly and smoothly as a thin layer on the surface of the woven fabric even when the amount of the resin is small.

Although the resin may be applied onto the both surfaces of a base fabric obtained by removing the sea-component from the woven fabric, according to the present invention, low air permeability and internal pressure-holding capability required of a fabric for restraint devices can be satisfactorily obtained by coating only one surface of the base fabric with the resin. For this reason, in the present invention, the resin is applied onto at least one surface of the base fabric.

From the viewpoint of achieving both flame retardancy and flexibility, the resin is preferably applied onto the surface of the base fabric two or more times. The reason for this is as follows. The base fabric using microfibers has micropores formed between the microfibers due to a very small diameter of the microfibers constituting the base fabric, and therefore the resin applied onto the surface of the base fabric for the first time is likely to penetrate into the inside of the base fabric through the micropores. Such a surface of the base fabric, onto which the resin has been applied only once, is poor in smoothness, which leads to an increase in burning rate as measured according to a flammability test based on FMVSS 302. This is disadvantageous from the viewpoint of flame retardancy. Therefore, the resin is again applied onto the surface of the base fabric to improve smoothness of the surface of the base fabric and flame retardancy of the base fabric. In addition, by applying the resin onto the surface of the base fabric in two or more times, it is also possible to reduce the viscosity of the resin to be used, thereby improving the smoothness of the resin-coated surface of the base fabric. Further, as described above, part of the resin applied onto the based fabric penetrates into the inside of the base fabric, which contributes to a reduction in the thickness of the resin-coated woven fabric and to an improvement in adhesion between the woven fabric and the resin.

Examples

The present invention will be described in more detail with reference to the following examples.

(Measurement Methods)

(1) Intrinsic Viscosity (IV) of Polyester

2 g of a sample polymer was dissolved in 25 mL of orthochlorophenol to prepare a polymer solution. Then, the relative viscosity ($\eta$rp) of the polymer solution was measured using an Ostwald viscometer at 25°C, and the intrinsic viscosity (IV) of the polymer was calculated using the following approximate expression: IV = 0.0242 · $\eta$rp + 0.2634, where $\eta$rp = (t $\times$ d) / (t$_o$ $\times$ d$_o$) , where t is a dropping time of the solution (sec), t$_o$ is a dropping time of orthochlorophenol (g/mL), d is a density of the solution (g/mL), and d$_o$ is a density of orthochlorophenol (g/mL).

(2) Fineness

According to JIS L 1013-1999 8.3.1 A, 3 small skeins (112.5 m each) were prepared, their masses were measured and averaged to obtain an average value (g), the average value was multiplied by 10000/112.5 to convert it into an apparent fineness, and a fineness based on corrected mass was calculated from the apparent fineness according to the following formula: F0 = D $\times$ (100+R0) / (100+Re), where F0 is a fineness based on corrected mass (dtex), D is an apparent fineness (dtex), R0 is an official moisture regain (%), and Re is an equilibrium moisture regain.

(3) Mass per Unit Area

According to JIS L 1096-1999 6.4.2, 3 specimens each having a size of 20 cm x 20 cm were cut from a sample, their masses (g) were measured and averaged to obtain an average value, and the average value was expressed as mass per square meter (g/m$^2$) .

(4) Thickness

According to JIS L 1096-1999 6.5, a pressure of 23.5 kPa was applied onto a sample for 10 seconds to settle down the thickness of the sample, and then the thickness (mm) of the sample was measured under the pressure at 5 different points thereof using a thickness tester and averaged.

(5) Tensile Strength of Fabric

According to a labeled strip method based on JIS L 1096-1999 8.12.1 A (strip method), 3 specimens having a 3 cm wide were cut from a woven fabric for measurement in its warp direction and for measurement in its weft direction, respectively. Each specimen was set in a constant-rate tensile tester so that a length between grips was 15 cm, and was then pulled at a rate of 200 mm/min to measure a breaking strength. The thus obtained 3 measurement values were averaged.

(6) Total Fineness of Microfibers and Fineness of Each Microfiber

From the total fineness of a conjugate multifilament and the rate of change in mass per unit area of a woven fabric before and after treatment for removing a sea-component, the total fineness of microfibers was calculated, and then the fineness of each of the microfibers was calculated by dividing the total fineness of the microfibers by the number of islands.

(7) Flexural Rigidity and Bending Hysteresis Width

Six strips each having a length of 14 cm and a width of 10 cm were cut from a woven fabric for measurement in its warp direction and for measurement in its weft direction, respectively. Two of the six strips cut from the woven fabric along the same direction (i.e., along the warp or weft direction) were brought into contact with each other, and two surfaces opposed to each other were rubbed together 100 times according to a rubbing test based on JIS K 6404-1999 5. 3 . 8 . Then, the two strips were reversed, and other two surfaces were rubbed together 100 times in the same manner (i . e . , 200 times in total) . In the case of a coated woven fabric, resin-coated surfaces were first rubbed together, and then their opposite resin-uncoated surfaces were rubbed together.
The residual 2 pairs of strips were also subjected to rubbing treatment. One pair was subjected to 200 times of rubbing per pair of surfaces (400 times in total) and the other pair was subjected to 300 times of rubbing per pair of surfaces (600 times in total).
A specimen having a length of 10 cm and a width of 5 cm was cut from the center part of one of the two strips subjected to rubbing treatment.
It is to be noted that one specimen having a length of 14 cm and a width of 10 cm was cut from the woven fabric along its warp direction and weft direction, respectively, and these specimens were not subjected to rubbing treatment.
The flexural rigidity ($g \cdot cm^2/cm$) of each of the thus prepared specimens was measured according to a Kawabata's evaluation system for fabric (KES-FB-2).
For the specimen not subjected to rubbing treatment, a bending hysteresis width ($g \cdot cm/cm$) was also measured.
It is to be noted that other conditions not described above were based on KES standard conditions.

(8) Packability

Packability was measured according to ASTM D-6478-02.

(9) Air Permeability (High Pressure Method)

The rate of flow of air passing through a sample was measured when air was supplied at a pressure of 19.6 kPa, and was expressed in $L/cm^2 \cdot sec$.

(10) Air Permeability (Frazier Method (125 Pa))

Air permeability was measured according to JIS L 1096-1999 8.27.1 A (Frazier method). Five specimens each having a size of about 20 cm x 20 cm were cut from a sample at 5 different positions thereof. The specimen was attached to one end of a cylinder of a Frazier type tester, and a suction fan was controlled by a rheostat so that an inclined barometer showed a pressure of 125 Pa. The volume of air that had passed through the specimen was determined from a pressure showed by a vertical barometer at this time and the type of air hole used by using a chart supplied with the tester. The air volumes determined for 5 specimens were averaged.

(11) Flammability (FMVSS 302)

Flammability was measured according to FMVSS 302. 5 specimens each having a width of 102 mm and a length of 356 mm were cut from a woven fabric for measurement in its warp direction and for measurement in its weft direction, respectively. Each of the specimens was subjected to a flammability test to calculate a burning rate from the following formula: $B = 60 \times (D/T)$, where B is a burning rate (mm/min) , D is the length the flame travels (mm), and T is the time for the flame to travel D mm (sec).
The fastest burning rate of the calculated burning rates was defined as a burning rate of the woven fabric.

(12) Flammability (LOI value)

Flammability (LOI value) was measured according to JIS 1091-1999 8.5 E (oxygen index method). Three E-2 type specimens each having a width of 60 mm and a length of 150 mm were cut from a woven fabric. A flammability test was carried out using a micro burner as an igniter, and an oxygen concentration necessary for the specimen to continuously burn for 3 minutes or longer, or necessary for the specimen to continuously burn 50 mm or longer thereof after ignition was determined from a table "Relationship between flow rates of oxygen and nitrogen and oxygen concentration" described in JIS 1091-1999 8.5 E. The oxygen concentrations determined for the 3 specimens were averaged.

(13) Wearer Comfort of Air Belt

Ten persons wore both an air belt produced using a fabric of Example and an air belt produced using a fabric of Comparative Example, and evaluated the wearer comfort of the air belts as "good" or "bad". It is to be noted that these 10 persons did not know which air belt was produced using a fabric of Example. The evaluation results were summarized and ranked on a scale of A to D, where A represents a case where 9 or 10 persons out of 10 persons evaluated the wearer comfort of the air belt as "good", B represents a case where 7 or 8 persons out of 10 persons evaluated the wearer comfort of the air belt as "good", C represents a case where 5 or 6 persons out of 10 persons evaluated the wearer comfort of the air belt as "good", and D represents a case where 4 or less persons out of 10 persons evaluated the wearer comfort of the air belt as "good".

Example 1

(Spinning - Drawing)

Polyethylene terephthalate (intrinsic viscosity: 1.20) was used as an island-component polymer. Polyethylene terephthalate copolymerized with 5.0 mol% of 5-sodium sulfoisophthalic acid (intrinsic viscosity: 0.70) was used as a sea-component polymer.
Both of the components were separately melt, and were then combined in a spinneret for sea-island type conjugate spinning to form a sea-island structure. The spinneret for sea-island type conjugate spinning had 60 holes for extrusion, and the number of islands per hole was 16. The mass ratio between the sea-component and the island-component contained in a sea-island type conjugate fiber was 28: 72. The temperature for spinning was 300°C. The melt polymers were extruded into conjugate fibers, and the extruded conjugate fibers were cooled with cool air to solidify them, taken up by a first roller at a speed of 400 m/min, and continuously drawn 5.0 times at 230°C without being wound up. Then, the conjugate fibers were subjected to relaxation treatment of 3% to obtain conjugate multifilaments, each of which had a total fineness of 280 dtex, 60 filaments, and a monofilament fineness of 4.7 dtex.

(Weaving)

The thus obtained conjugate multifilaments were woven into a plain-weave fabric with a water jet loom so that a warp density was 68 per 2.54 cm and a weft density was 68 per 2.54 cm.

(Treatment for Removing Sea-component)

The woven fabric was treated, under a relaxed state, in a boiling 1 % aqueous sulfuric acid solution for 60 minutes, and was then passed through an aqueous sodium hydroxide solution at a temperature of 90°C to remove the sea-component. Then, the woven fabric was dried.

(Heat Set)

The woven fabric, from which the sea-component had been removed, was subjected to heat set at 150°C for 1 minute.

(Coating)

The woven fabric was then coated with a 23 g/m$^2$ of a solvent-free methyl vinyl silicone resin solution having a viscosity of 12 Pa·s (12, 000 cP) using a floating knife coater.

(Vulcanization)

The resin-coated woven fabric was then vulcanized at 190°C for 2 minutes.

Example 2

(Spinning · Drawing)

Conjugate multifilaments, each of which had a total fineness of 235 dtex, 60 filaments, and a monofilament fineness of 3.9 dtex, were obtained in the same manner as in Example 1 except that the mass ratio between the sea-component and the island-component contained in the conjugate fiber was changed to 20: 80 to change the total amount of the melt polymers extruded from the spinneret.

(Weaving)

The thus obtained conjugate multifilaments were woven into a plain-weave fabric with a water jet loom so that a warp density was 74 per 2.54 cm and a weft density was 64 per 2.54 cm.

(Treatment for Removing Sea-component)

The sea-component was removed in the same manner as in Example 1.

(Heat Set)

The woven fabric, from which the sea-component had been removed, was subjected to heat set in the same manner as in Example 1.

(Coating)

Coating of the woven fabric was carried out in the same manner as in Example 1.

(Vulcanization)

The coated woven fabric was vulcanized in the same manner as in Example 1.

Example 3

(Spinning · Drawing)

Conjugate multifilaments, each of which had a total fineness of 198 dtex, 27 filaments, and a monofilament fineness of 7.3 dtex, were obtained in the same manner as in Example 1 except that the number of holes of the spinneret for sea-island type conjugate spinning was changed to 27, the number of islands per hole was changed to 70, the mass ratio between the sea-component and the island-component contained in the conjugate fiber was changed to 20: 80 to change the total amount of the melt polymers extruded from the spinneret.

(Weaving)

The thus obtained conjugate multifilaments were woven into a plain-weave fabric with a water jet loom so that a warp density was 80 per 2.54 cm and a weft density was 70 per 2.54 cm.

(Treatment for Removing Sea-component)

The sea-component was removed in the same manner as in Example 1.

(Heat Set)

The woven fabric, from which the sea-component had been removed, was subjected to heat set in the same manner as in Example 1.

(Coating)

Coating of the woven fabric was carried out in the same manner as in Example 1 except that the amount of the resin solution applied onto the woven fabric was changed to 22 g/m$^2$.

(Vulcanization)

The coated woven fabric was vulcanized in the same manner as in Example 1.

(Application of Coated Woven Fabric to Restraint Device)

The thus obtained coated woven fabric was used to produce an air belt. Ten persons wore the air belt to evaluate wearer comfort. As a result, all the 10 persons evaluated the wearer comfort of the air belt as "good".

Example 4

(Spinning · Drawing)

Conjugate multifilaments, each of which had a total fineness of 280 dtex, 60 filaments, and a monofilament fineness of 4.7 dtex, were obtained in the same manner as in Example 1 except that the island-component was changed to polyethylene terephthalate copolymerized with10,000 ppm by mass (calculated as elemental phosphorus) of a bifunctional phosphorus compound (manufactured by Hoechst under the trade name of "Phosphorane") (intrinsic viscosity: 1.00).

(Weaving)

The thus obtained conjugate multifilaments were woven into a plain-weave fabric with a water jet loom so that a warp density was 68 per 2.54 cm and a weft density was 68 per 2.54 cm.

(Treatment for Removing Sea-component)

The sea-component was removed in the same manner as in Example 1.

(Heat Set)

The woven fabric, from which the sea-component had been removed, was subjected to heat set in the same manner as in Example 1.

(Coating)

Coating of the woven fabric was carried out in the same manner as in Example 1 except that the amount of the resin solution applied onto the woven fabric was changed to 25 g/m$^2$.

(Vulcanization)

The coated woven fabric was vulcanized in the same manner as in Example 1.

Example 5

(Spinning · Drawing)

Conjugate multifilaments, each of which had a total fineness of 600 dtex, 30 filaments, and a monofilament fineness of 20 dtex, were obtained in the same manner as in Example 1 except that the number of holes of the spinneret for sea-island type conjugate spinning was changed to 30, the number of islands per hole was changed to 60, the mass ratio between the sea-component and the island-component contained in the conjugate fiber was changed to 20: 80 to change the total amount of the melt polymers extruded from the spinneret.

(Weaving)

The thus obtained conjugate multifilaments were woven into a plain-weave fabric with a water-jet loom so that a warp density was 48 per 2.54 cm and a weft density was 43 per 2.54 cm.

(Treatment for Removing Sea-component)

The sea-component was removed in the same manner as in Example 1.

(Heat Set)

The woven fabric, from which the sea-component had been removed, was subjected to heat set in the same manner as in Example 1.

(Coating)

Coating of the woven fabric was carried out in the same manner as in Example 1 except that the amount of the resin solution applied onto the woven fabric was changed to 22 g/m$^2$.

(Vulcanization)

The coated woven fabric was vulcanized in the same manner as in Example 1.

Example 6

(Spinning · Drawing)

Conjugate multifilaments were obtained in the same manner as in Example 1.

(Weaving)

The thus obtained conjugate multifilaments were woven into a plain-weave fabric in the same manner as in Example 1.

(Treatment for Removing Sea-component)

The sea-component was removed in the same manner as in Example 1.

(Heat Set)

The woven fabric, from which the sea-component had been removed, was subjected to heat set in the same manner as in Example 1.

(Coating (First Time))

The woven fabric was coated with a 14 g/m$^2$ of a solvent-free methyl vinyl silicone resin solution having a viscosity of 12 Pa·s (12, 000 cP) using a floating knife coater.

(Vulcanization)

The coated woven fabric was vulcanized at 190°C for 2 minutes.

(Coating (Second Time))

The coated surface of the woven fabric was again coated with a 14 g/m$^2$ of a solvent-free methyl vinyl silicone resin solution having a viscosity of 12 Pa·s (12,000 cP) using a floating knife coater.

(Vulcanization)

The coated woven fabric was vulcanized at 190°C for 2 minutes.

Example 7

(Flat Fiber)

Untwisted nylon 6,6 multifilaments, each of which was composed of flat fibers each having a cross section with an aspect ratio of 3.7, and had a total fineness of 280 dtex, 36 filaments, a strength of 7.9 cN/dtex, and a degree of elongation of 23.5 %, were prepared.

(Weaving)

The multifilaments were woven into a plain-weave fabric with a water jet loom so that a warp tension was 120 g/yarn (1.18 N/yarn), a warp density was 60 per 2.54 cm, and a weft density was 60 per 2.54 cm.

(Coating)

Coating of the woven fabric was carried out in the same manner as in Example 1 except that the amount of the resin solution applied onto the woven fabric was changed to 18 g/m$^2$.

(Vulcanization)

The coated woven fabric was vulcanized in the same manner as in Example 1.

Comparative Example 1

(Filament)

Nylon 6,6 multifilaments, each of which was composed of monofilaments each having a circular cross section, and had a total fineness of 235 dtex, 36 filaments, and a strength of 8.3 cN/dtex, were prepared.

(Weaving)

The multifilaments were woven into a plain-weave fabric with a water jet loom so that a warp density was 54.5 per 2.54 cm and a weft density was 55 per 2.54 cm.

(Coating)

Coating of the woven fabric was not carried out.

Comparative Example 2

(Filament)

Nylon 6,6 multifilaments, each of which was composed of monofilaments each having a circular cross section, and had a total fineness of 235 dtex, 36 filaments, and a strength of 8.3 cN/dtex, were prepared.

(Weaving)

The multifilaments were woven into a plain-weave fabric with a water jet loom so that a warp density was 54.5 per 2.54 cm and a weft density was 55 per 2.54 cm.

(Coating)

Coating of the woven fabric was carried out in the same manner as in Example 1 except that the amount of the resin solution applied onto the woven fabric was changed to 17 g/m$^2$.

(Vulcanization)

The coated woven fabric was vulcanized in the same manner as in Example 1.

Comparative Example 3

(Spinning · Drawing)

Conjugate multifilaments, each of which had a total fineness of 198 dtex, 27 filaments, and a monofilament fineness of 7.3 dtex, were obtained in the same manner as in Example 1 except that the number of holes of the spinneret for sea-island type conjugate spinning was changed to 27, the number of islands per hole was changed to 70, the mass ratio between the sea-component and the island-component contained in the conjugate fiber was changed to 20: 80 to change the total amount of the melt polymers extruded from the spinneret.

(Weaving)

The thus obtained conjugate multifilaments were woven into a plain-weave fabric in the same manner as in Example 1.

(Treatment for Removing Sea-component)

The sea-component was removed in the same manner as in Example 1.

(Heat Set)

The woven fabric, from which the sea-component had been removed, was subjected to heat set in the same manner as in Example 1.

(Coating)

Coating of the woven fabric was carried out in the same manner as in Example 1 except that the amount of the resin solution applied onto the woven fabric was changed to 42 g/m$^2$.

(Vulcanization)

The coated woven fabric was vulcanized in the same manner as in Example 1.

Comparative Example 4

(Filament)

Nylon 6, 6 multifilaments, each of which was composed of monofilaments each having a circular cross section, and had a total fineness of 198 dtex, 99 filaments, and a strength of 7.2 cN/dtex, were prepared.

(Weaving)

The multifilaments were woven into a plain-weave fabric with a water jet loom so that a warp density was 81 per 2.54 cm and a weft density was 81 per 2.54 cm.

(Coating)

Coating of the woven fabric was carried out in the same manner as in Example 1 except that the amount of the resin solution applied onto the woven fabric was changed to 25 g/m$^2$.

(Vulcanization)

The coated woven fabric was vulcanized in the same manner as in Example 1.

Comparative Example 5

(Filament)

Nylon 6,6 multifilaments, each of which was composed of monofilaments each having a circular cross section, and had a total fineness of 198 dtex, 99 filaments, and a strength of 7.2 cN/dtex, were prepared.

(Weaving)

The multifilaments were woven into a plain-weave fabric with a water jet loom so that a warp density was 81 per 2.54 cm and a weft density was 81 per 2.54 cm.

(Coating)

Coating of the woven fabric was not carried out.

Comparative Example 6

(Flat Fiber)

Untwisted nylon 6,6 multifilaments, each of which was composed of flat fibers each having a cross section with an aspect ratio of 3.7, and had a total fineness of 280 dtex, 36 filaments, a strength of 7.9 cN/dtex, and a degree of elongation of 23.5 %, were prepared.

(Weaving)

The multifilaments were woven into a plain-weave fabric with a water jet loom so that a warp tension was 120 g/yarn (1.18 N/yarn), a warp density was 60 per 2.54 cm, and a weft density was 60 per 2.54 cm.

(Coating)

Coating of the woven fabric was not carried out.

Table 1

Table 2

(Application of Coated Woven Fabric to Air Bag)

The coated woven fabrics obtained in Examples 1 to 7 were used to produce air bags, and these air bags were excellent in rapid deployability and occupant restraint performance.

(Application of Coated Woven Fabric to Air Belt)

The coated woven fabrics obtained in Examples 1 to 7 were used to produce air belts, and these air belts were excellent in rapid deployability and occupant restraint performance.

INDUSTRIAL APPLICABILITY

The fabric for restraint devices of the present invention can be suitably used not only for air bags but also for air belts required to have more rapid deployability and higher occupant restraint performance than air bags, and flexibility for wearer comfort.

Table 1

| | Example 1 | Example 2 | Example 3 | Example 4 | Example 5 | Example 6 | Example 7 |
|---|---|---|---|---|---|---|---|
| Total fineness of conjugate fiber multifilament (dtex | 280 | 235 | 198 | 280 | 600 | 280 | 280 |
| number of conjugate fiber filaments | 60 | 60 | 27 | 60 | 30 | 60 | 36 |
| monofilament fineness of conjugate fiber (dtex) | 4.67 | 3.92 | 7.33 | 4.67 | 20 | 4.67 | 7.78 |
| island-component polymer | PET | PET | PET | P-PET | PET | PET | nylon 6,6 |
| sea-component polymer | Co-PET | Co-PET | Co-PET | Co-PET | Co-PET | Co-PET | - |
| ratio between the sea-component and the island-componer | 28:72 | 20:80 | 20:80 | 28:72 | 20:80 | 28:72 | - |
| tenacity of raw yarn (cN/dtex) | 6.7 | 7.9 | 7.9 | 6.7 | 6.7 | 6.7 | 7.9 |
| density of grey fabric (yarns/2.54cm) | 68/68 | 74/64 | 80/70 | 68/68 | 43/43 | 68/68 | 60/60 |
| cover factor of grey fabric | 2276 | 2115 | 2111 | 2276 | 2107 | 2276 | 2008 |
| mass per unit area of grey fabric (g/m$^2$) | 127 | 118 | 118 | 127 | 117 | 127 | 140 |
| thickness of grey fabric (mm) | 0.2 | 0.18 | 0.18 | 0.21 | 0.27 | 0.2 | 0.22 |
| total fineness of microfibers (dtex) | 202 | 188 | 158 | 202 | 480 | 202 | 280 |
| number of microfiber filaments | 960 | 960 | 1890 | 960 | 480 | 960 | 36 |
| density of coated woven fabric (yarns/2.54cm) | 77/68 | 83/64 | 91.5/70 | 75/68 | 48/43 | 77/68 | 60/60 |
| cover factor of coated woven fabric | 2061 | 2016 | 2030 | 2030 | 1994 | 2061 | 2008 |
| amount of resin (g/m$^2$) | 23 | 23 | 22 | 25 | 22 | 28 | 18 |
| mass per unit area of coated woven fabric (g/m$^2$) | 125 | 123 | 121 | 138 | 150 | 130 | 158 |
| thickness of coated woven fabric (mm) | 0.16 | 0.16 | 0.16 | 0.18 | 0.23 | 0.17 | 0.22 |
| packability (cm$^3$) | 734 | 682 | 695 | 790 | 1200 | 763 | 1098 |
| tensile strength of fabric (N/cm) strength of fabric (N/cm) | warp | 368 | 428 | 394 | 346 | 400 | 368 | 470 |
| | weft | 265 | 272 | 251 | 289 | 350 | 258 | 452 |
| air permeability | High Pressure method (L/cm$^2$sec) | 0.00 | 0.00 | 0.00 | 0.00 | 0.00 | 0.00 | 0.00 |
| | Frazier method (mL/cm$^2$sec) | 0.00 | 0.00 | 0.00 | 0.00 | 0.00 | 0.00 | 0.00 |

(continued)

| | | | | Example 1 | Example 2 | Example 3 | Example 4 | Example 5 | Example 6 | Example 7 |
|---|---|---|---|---|---|---|---|---|---|---|
| KES FB-2 | flexural rigidity (gcm$^2$/cm) | 0 time | warp | 0.75 | 0.68 | 0.70 | 0.71 | 0.82 | 0.58 | 0.68 |
| | | | weft | 0.42 | 0.15 | 0.16 | 0.38 | 0.94 | 0.45 | 0.79 |
| | | 200 times | warp | 0.22 | 0.19 | 0.20 | 0.22 | 0.23 | 0.22 | 0.2 |
| | | | weft | 0.15 | 0.09 | 0.09 | 0.15 | 0.25 | 0.15 | 0.24 |
| | | 400 times | warp | 0.19 | 0.18 | 0.18 | 0.19 | 0.21 | 0.19 | 0.2 |
| | | | weft | 0.14 | 0.08 | 0.08 | 0.14 | 0.22 | 0.14 | 0.23 |
| | | 600 times | warp | 0.19 | 0.18 | 0.18 | 0.19 | 0.2 | 0.19 | 0.2 |
| | | | weft | 0.14 | 0.08 | 0.08 | 0.14 | 0.21 | 0.14 | 0.22 |
| | bending hysteresis width | | warp | 0.27 | 0.25 | 0.21 | 0.27 | 0.61 | 0.27 | 0.58 |
| | | | weft | 0.08 | 0.07 | 0.05 | 0.08 | 0.68 | 0.08 | 0.69 |
| | FMVSS302 (mm/min) | | | 90 | 100 | 110 | 61 | 58 | 88 | 48 |
| flammability | LOI(%) | | | 20 | 19 | 19 | 22 | 23 | 20 | 23 |
| | wearer comfort | | | B | A | A | B | B | B | B |

**Claims**

1. A fabric for restraint devices, comprising a coated woven fabric obtained by coating, with a resin, at least one surface of a woven fabric containing multifilaments, each of which is composed of microfibers each having a fineness of 0.05 to 1 dtex, wherein the thickness of the coated woven fabric is in the range of 0.10 to 0.25 mm.

2. The fabric for restraint devices according to claim 1, wherein at least part of the microfibers constituting the woven fabric are made of a polyester containing a phosphorus-based copolymer component in an amount of 500 to 50,000 ppm by mass calculated as elemental phosphorus.

3. The fabric for restraint devices according to claim 1, wherein each of the microfibers constituting the woven fabric has a fineness of 0.25 dtex or less.

4. The fabric for restraint devices according to claim 1, wherein the amount of the resin, with which the woven fabric is coated, is in the range of 5 to 40 g/m$^2$.

5. The fabric for restraint devices according to claim 1, wherein the thickness of the coated woven fabric is 0.19 mm or less.

6. The fabric for restraint devices according to claim 1, wherein the coated woven fabric has a tensile strength of 250 N/cm or more in its both warp direction and weft direction.

7. The fabric for restraint devices according to claim 1, wherein the coated woven fabric has a flexural rigidity of 0.05 to 1.5 g·cm$^2$/cm in its both warp direction and weft direction, as measured according to KES-FB-2.

8. The fabric for restraint devices according to claim 1, wherein the coated woven fabric has a bending hysteresis width of 0.1 to 0.7 g·cm/cm in its both warp direction and weft direction, as measured according to KES-FB-2.

9. The fabric for restraint devices according to claim 1, wherein the coated woven fabric has a flexural rigidity of 0.05 to 0.25 g·cm$^2$/cm in its both warp direction and weft direction, as measured according to KES-FB-2 after the coated woven fabric was subjected to 100 times of rubbing and after the coated woven fabric was subjected to 300 times of rubbing according a rubbing test based on JIS K 6404-1999 5.3.8.

10. The fabric for restraint devices according to claim 1, wherein the coated woven fabric has a packability of 500 to 1300 cm$^3$ as measured according to ASTM 6478-00.

11. The fabric for restraint devices according to claim 1, wherein the coated woven fabric has an air permeability of 0.1 mL/cm$^2$·sec or less as measured according to JIS L 1096 A (Frazier method).

12. The fabric for restraint devices according to claim 1, wherein the coated woven fabric has a burning rate of 120 mm/min or less as measured according to FMVSS 302.

13. The fabric for restraint devices according to claim 12, wherein the coated woven fabric has a burning rate of 90 mm/min or less as measured according to FMVSS 302.

14. The fabric for restraint devices according to claim 1, wherein the coated woven fabric has an LOI value of 18 or more as measured according to JIS 1091 E.

15. The fabric for restraint devices according to claim 1, which is to be used for air bags.

16. The fabric for restraint devices according to claim 1, which is to be used for air belts.

17. A fabric for restraint devices, comprising a coated woven fabric obtained by coating, with a resin, at least one surface of a woven fabric containing multifilaments, each of which is composed of flat fibers each having a cross section with an aspect ratio of 2 to 4, and each of which has a total fineness of 150 to 350 dtex.

18. The fabric for restraint devices according to claim 17, which is to be used for air bags.

**19.** The fabric for restraint devices according to claim 17, which is to be used for air belts.

**20.** A method for producing a fabric for restraint devices, comprising at least:

a first step of melt-extruding both, as an island-component, a resin composition containing polyethylene terephthalate having an intrinsic viscosity of 0. 6 or more and, as a sea-component, a resin composition having a higher solubility in a solvent for treatment used in a third step than the island-component into sea-island type conjugate fibers containing the sea-component in a ratio of 10 to 40 % by mass, and spinning and drawing the extruded conjugate fibers to obtain conjugate multifilaments, each of which has a monofilament fineness of 3 to 9 dtex, a total fineness of 150 to 350 dtex, and 15 to 120 filaments;
a second step of weaving a plain-weave fabric using the conjugate multifilaments obtained in the first step as the warp and weft so that the cover factor of the woven fabric is in the range of 1800 to 2400;
a third step of removing the sea-component of the woven fabric obtained in the second step so that microfibers each having a fineness of 0.05 to 1 dtex appear from the conjugate multifilaments; and
a fourth step of coating at least one surface of the woven fabric, from which the sea-component has been removed in the third step, with 5 to 40 g/m$^2$ of a resin; wherein the above steps are carried out in order.

**21.** The method for producing a fabric for restraint devices according to claim 20, wherein the island-component used in the first step is flame-retardant polyethylene terephthalate which is copolymerized with a bifunctional phosphorus compound in an amount of 500 to 50, 000 ppm calculated as phosphorus, and which has an intrinsic viscosity of 0.6 to 1.2.

**22.** The method for producing a fabric for restraint devices according to claim 20, further comprising, between the third step and the fourth step, the step of subjecting a base fabric, obtained by removing the sea-component from the woven fabric, to heat set at a temperature of 140 to 190°C for 1 to 2 minutes.

**23.** The method for producing a fabric for restraint devices according to claim 20, wherein in the fourth step, coating of the woven fabric with the resin is performed in two or more times.

## INTERNATIONAL SEARCH REPORT

| International application No. |
| --- |
| PCT/JP2005/019067 |

**A. CLASSIFICATION OF SUBJECT MATTER**
*D06M11/00*(2006.01), *D06M11/38*(2006.01), *D03D15/00*(2006.01), *B60R21/18* (2006.01), *B60R22/28*(2006.01)

According to International Patent Classification (IPC) or to both national classification and IPC

**B. FIELDS SEARCHED**

Minimum documentation searched (classification system followed by classification symbols)
B60R21/18, B60R22/28, D03D15/00, D06M11/00, D06M11/38

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 7-258940 A  (Toray Industries, Inc.), 09 October, 1995 (09.10.95), Full text & US 005637385 A1          & EP 000666344 A1 & DE 069512283 D          & DE 069512283 T & CN 001115342 A          & CN 002141768 A & CN 002141768 A1 | 1-23 |
| Y | JP 11-348724 A  (Takata Corp.), 21 December, 1999 (21.12.99), Full text & US 006164692 A1          & EP 000964087 A2 & DE 069923111 D | 1-23 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 17 January, 2006 (17.01.06) | 24 January, 2006 (24.01.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/019067 |

C (Continuation).　DOCUMENTS CONSIDERED TO BE RELEVANT

| Category* | Citation of document, with indication, where appropriate, of the relevant passages | Relevant to claim No. |
| --- | --- | --- |
| Y | JP 9-111587 A  (Hoechst Trevira GmbH & Co. KG), 28 April, 1997 (28.04.97), Full text & EP 000773140 A1        & DE 019537699 A & DE 059606303 D        & BR 009605036 A & CN 001157347 A        & CA 002187586 A & CA 002187586 A1 | 1-23 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11348724 B
- JP H7258940 A